# EUROPÄISCHE PATENTANMELDUNG

(11) **EP 0 992 533 A1**
(43) Veröffentlichungstag der Anmeldung: **12.04.2000**
(21) Anmeldenummer: 99118451.6
(22) Anmeldetag: 17.09.1999
(51) Int. Cl.: C08K 5/00, C08L 75/04

(54) **Polyisocyanat-Polyadditionspodukte, enthaltend kovalent gebundene Farbstoffe und Stabilisatoren**

(30) Priorität: 09.10.1998 DE 19846528
(71) Anmelder: BASF AKTIENGESELLSCHAFT, 67056 Ludwigshafen (DE)
(72) Erfinder: Fritz, Ralf, Dr., 67158 Ellerstadt (DE); Becker, Johannes Dr., 3060 Bertem (NL); Tänny, Günter, 67583 Guntersblum (DE); Hacke, Wolfgang, 67273 Bobenheim (DE)

(57) **Zusammenfassung**

Polyisocyanat-Polyadditionsprodukte, enthaltend kovalent gebundene Farbstoffe sowie als Stabilisatoren
(i) mindestens einen UV-Absorber, ausgewählt aus der Gruppe der Benztriazole, Zimtsäureester, Diphenylacrylate und/oder Benzophenone,
(ii) mindestens ein Antioxidants, ausgewählt aus der Gruppe der Phosphite, der Sulfite, Phenothiazin und/oder Dilauryl-3,3'-thiodipropionat,
(iii) mindestens einen Radikalfänger, ausgewählt aus der Gruppe der sterisch gehinderten Amine.

## Beschreibung

Die Erfindung betrifft Polyisocyanat-Polyadditionsprodukte, enthaltend kovalent gebundene Farbstoffe sowie als Stabilisatoren
(i) mindestens einen UV-Absorber, ausgewählt aus der Gruppe der Benztriazole, Zimtsäureester, Diphenylacrylate und/oder Benzophenone,
(ii) mindestens ein Antioxidants, ausgewählt aus der Gruppe der Phosphite, der Sulfite, Phenothiazin und/oder Dilauryl-3'3'-thiodipropionat,
(iii) mindestens einen Radikalfänger, ausgewählt aus der Gruppe der sterisch gehinderten Amine
sowie deren Verwendung und Verfahren zu deren Herstellung durch Umsetzung von Isocyanaten mit gegenüber Isocyanaten reaktiven Verbindungen und gegenüber Isocyanaten reaktiven Farbstoffen in Gegenwart von Stabilisatoren und gegebenenfalls Treibmitteln, Katalysatoren, Hilfsmitteln und/oder Zusatzstoffen.

Des weiteren bezieht sich die Erfindung auf Mischungen, enthaltend gegenüber Isocyanaten reaktive Farbstoffe sowie als Stabilisatoren
(i) mindestens einen UV-Absorber, ausgewählt aus der Gruppe der Benztriazole, Zimtsäureester, Diphenylacrylate und/oder Benzophenone,
(ii) mindestens ein Antioxidants, ausgewählt aus der Gruppe der Phosphite, der Sulfite, Phenothiazin und/oder Dilauryl-3,3'-thiodipropionat,
(iii) mindestens einen Radikalfänger, ausgewählt aus der Gruppe der sterisch gehinderten Amine, im folgenden auch als HALS bezeichnet.

Polyisocyanat-Polyadditionsprodukte, die üblicherweise Polyurethan- und gegebenenfalls Polyisocyanuratstrukturen aufweisen, beispielsweise zellige Polyurethane, z.B. harte oder weiche Polyurethanschaumstoffe, kompakte Polyurethane, thermoplastische Polyurethane (TPU), duromere oder elastische Polyurethane oder Polyisocyanurate, sind allgemein bekannt. Die Herstellung dieser Produkte ist vielfach beschrieben und erfolgt üblicherweise durch Umsetzung von Isocyanaten mit gegenüber Isocyanaten reaktiven Verbindungen, gegebenenfalls in Gegenwart von Treibmitteln, Katalysatoren, Hilfsmitteln und/oder Zusatzstoffen nach üblichen Verfahren, beispielsweise im one-shot-Verfahren oder nach dem Prepolymerverfahren, z.B. in Formen, in einem Reaktionsextruder oder auch einer Bandanlage. Ein spezielles Herstellverfahren stellt das reaction-injection-moulding- (RIM-) Verfahren dar, das bevorzugt zur Herstellung von Polyurethanen mit einem geschäumten oder kompakten Kern und einer überwiegend kompakten, nichtporösen Oberfläche angewandt wird und allgemein bekannt ist.

Bei Polyisocyanat-Polyadditionsprodukten kann man prinzipiell zwischen Produkten unterscheiden, die unter Verwendung von aromatischen Verbindungen, insbesondere aromatischen Isocyanaten, hergestellt sind und solchen, die ausschließlich auf aliphatischen Substanzen, insbesondere aliphatischen Isocyanaten, basieren. Polyurethane auf der Basis von aromatischen Isocyanaten unterliegen bei Bestrahlung mit UV-Licht einer Photolyse (Fries Umlagerung) bzw. unter Sauerstoffeinfluß einer Photooxidation, bei der aus den aromatischen Anteilen farbige Abbauprodukte entstehen, die zu einer Vergilbung und Versprödung des Polyurethans führen. Aliphatische Polyurethane zeigen naturgemäß dieses Ausmaß an Abbaureaktionen nicht. Dennoch werden vielfältig bevorzugt Polyurethane auf der Basis aromatischer Isocyanate eingesetzt, da diese günstiger herzustellen sind.

Insbesondere in Außenanwendungen, bei denen die Polyisocyanat-Polyadditionsprodukte der Witterung ausgesetzt sind, stellt man bei aromatischen Polyurethanen einen Abbau der Oberfläche beispielsweise durch Photooxidation fest, der zu einem verstärkten Abrieb führt. Dieser Effekt ist als Verkreidung bekannt und kann beispielsweise durch künstliche Witterungseinflüsse nach DIN 53387 nachgestellt werden. Die Verkreidung bedeutet gegenüber aliphatischen Systemen einen deutlichen Materialnachteil insbesondere bei Scheibenumgüssen, z.B. im Automobilsektor, die üblicherweise mit Ruß schwarz eingefärbt sind und aufgrund der Verkreidung unerwünscht bleichen und zudem die Rußpartikel an der Oberfläche abgeben. Diese Farbveränderungen sowie die Abgabe der Farbstoffe aus den Produkten sind für viele Anwendungen unerwünscht.

Als Stabilisatoren für Polyisocyanat-Polyadditionsprodukte sind folgende Verbindungen allgemein bekannt: 2,6-Di-tert.butyl-p-kresol oder davon abgeleitete Derivate wie 2,6-Di-tert.butyl-4-nonylphenol oder verschiedene Ester (z.B. Octyl oder Stearyl) von 2,6 Di-tert.butyl-4-propionsäure. Ebenfalls bekannt sind als Stabilisatoren sterisch gehinderte Amine wie z.B. Diphenylamin und Bis-(4-octylphenyl)amin.

Nachteile durch die Verwendung dieser Verbindungen ergeben dadurch, daß sie die Oxidation von Polyurethan nur in einem eingeschränkten Maße bei thermischer Beanspruchung verhindern. Einen Polymerabbau des Polyurethans unter Bewitterungseinflüssen, beispielsweise bei Außenanwendungen, können diese Stabilisatoren nicht oder nur teilweise verhindern.

Der vorliegenden Erfindung lag daher die Aufgabe zugrunde, Polyisocyanat-Polyadditionsprodukte, bevorzugt solche, die auf aromatischen Isocyanaten basieren, zu entwickeln, die insbesondere in Außenanwendungen, beispielsweise Scheibenumgüssen, eine deutlich verringerte Abgabe von Farbstoffen aus den Produkten, beispielsweise durch Abrieb, Vergilbung oder Migration der Farbpartikel, aufweisen.

Diese Aufgabe wurde erfindungsgemäß durch die eingangs definierten Mischungen gelöst.

Die erfindungsgemäßen Polyisocyanat-Polyadditionsprodukte enthalten Farbstoffe, die kovalent in der Polyisocyanat-Polyadditionsmatrix gebunden sind. Derartige Polyisocyanat-Polyadditionsprodukte können hergestellt werden, indem man die Umsetzung der Isocyanate mit den gegenüber Isocyanaten reaktiven Verbindungen in Gegenwart der gegenüber Isocyanaten reaktiven Farbstoffe durchführt. Durch die Reaktion der Isocyanate mit den gegenüber Isocyanaten reaktiven Fabstoffen erfolgt der kovalente Einbau der Farbstoffe in die Produkte.

Der Einsatz von Farbstoffen mit gegenüber Isocyanaten reaktiven Gruppen, wie z.B. primäre, sekundäre Aminogruppen oder Hydroxylgruppen, verhindert die Migration, da die Farbstoffe in das Polyurethan kovalent eingebaut werden. Die hier verwendeten Farbstoffe sind homogen in der Polyolkomponente löslich, erhöhen die Viskosität der Polyolkomponente nicht und besitzen üblicherweise OH-Zahlen von 60 bis 250 mg KOH/g. Durch Mischung verschiedener Farbstoffe können weitgehend beliebige Färbungen in den Polyisocyanat-Polyadditionsprodukten erzeugt werden. Bevorzugt werden einzelne Farbstoffe oder Gemische von Farbstoffen eingesetzt, die eine schwarze Färbung der Polyisocyanat-Polyadditionsprodukte erzeugen.

Schwarzpasten sowie farbige Dispersionen, die in der Regel zur Einfärbung von polymeren Werkstoffen benutzt werden, besitzen für die Verarbeitung im RIM-Verfahren den Nachteil, daß sie sich leicht absetzen können und abrasiv wirken, da sie aus feingemahlenen Pigmenten bestehen. Die Pigmente werden üblicherweise in die flüssige Polyolkomponente eingerührt, deren Viskosität dadurch drastisch erhöht wird, welches die Verarbeitung deutlich erschwert oder sogar unmöglich macht, wenn die Fließwege für das Formteil sehr groß sind. Organische Farbstoffmoleküle weisen eine geringe UV-Stabilität auf, so daß ihr Einsatz in RIM-Systemen für Außenanwendungen, z.B. Scheibenumguß, bisher nicht möglich war. Zusätzlich besteht hier die Gefahr, daß diese Farben aus dem Polyurethan migrieren bzw. ausgewaschen werden können. Die besonders bevorzugte Kombination der erfindungsgemäßen Stabilisatoren (i),(ii) und (iii) und den Reaktivfarbstoffen ermöglicht es, stabil gefärbte Polyisocyanat-Polyadditionsprodukte herzustellen, die die beschriebenen Nachteile nicht aufweisen. Polyisocyanat-Polyadditionsprodukte, die in Gegenwart solcher Reaktivfarbstoffe hergestellt wurden, weisen zusätzlich zu der erfindungsgemäß verbesserten Stabilisierung den Vorteil auf, daß die Farbstoffe im Gegensatz zu der üblichen Einfärbung mit Ruß nicht aus den Produkten migrieren können. Insbesondere bei der schwarzen Einfärbung kann somit eine unerwünschte Übertragung von Farbstoffen aus dem Produkten verhindert werden. Somit kann eine nachhaltigere Einfärbung der Produkte erreicht und eine Verkreidung verhindert werden.

Als gegenüber Isocyanaten reaktive Farbstoffe können bekannte Farbstoffe verwendet werden, die mindestens eine, bevorzugt 1 bis 3 gegenüber Isocyanaten reaktive Gruppe, beispielsweise Amino-, Hydroxy- und/oder Thiolgruppen, enthalten. Derartige Farbstoffe sind bekannt und kommerziell erhältlich. Beispielsweise können als Farbstoffe folgende Verbindungen verwendet werden: Reactint® Black X95AB, Reactint® Violet X80LT, Reactint® Yellow X15, Reactint® Blue 17 AB, Reactint® Black 2256 und Mischungen dieser Farbstoffe der Fa. Milliken Chemicals, 18 HAM, B-9000 Gent.

Die Farbstoffe werden bevorzugt in Mengen von 1 bis 6 Gew.-%, bezogen auf das Gesamtgewicht der gegenüber Isocyanaten reaktiven Verbindungen, eingesetzt.

Die erfindungsgemäßen Polyisocyanat-Polyadditionsprtodukte enthalten neben den bereits beschriebenen kovalent gebundenen Farbstoffen Stabilisatoren, wobei mindestens einer aus jeder der folgenden drei Gruppen enthalten ist:
(i) mindestens einen UV-Absorber, ausgewählt aus der Gruppe der Benztriazole, Zimtsäureester, Diphenylacrylate, Benzophenone, bevorzugt 2-Hydroxy-4-octoxybenzophenon, 2-Ethyl-p-methoxycinnamat, 2-Ethylhexyl-p-methoxycinnamat, Polyethylenglykol-3-[3-(2H-benzotriazol-2-yl)-5-tert.butyl-4-hydroxyphenyl]propionat, 2-(2'-hydroxy-5'methyl-phenyl)-benzotriazol, 2-(5-chloro-2H-benzotriazol-2-yl-6-(1,1-dimethyl-ethyl)-4-methyl-phenol, 2-Ethyl-2-cyan-3,3-diphenylacrylat,
(ii) mindestens ein Antioxidants, ausgewählt aus der Gruppe der Phosphite, der Sulfite, Phenothiazin und/oder Dilauryl-3,3'-thiodipropionat, bevorzugt Trisnonylphenylphosphit, Triphenylphosphit, Phenothiazin, Tris-(2,4-ditert.butylphenyl)-phosphit und/oder Dilauryl-3,3'-thiodipropionat,
   sowie
(iii) mindestens ein Radikalfänger, ausgewählt aus der Gruppe der sterisch gehinderten Amine, beispielsweise Diphenylamin und/oder Bis-(4-octylphenyl)amin, bevorzugt Bis(1,2,2,6,6-pentamethyl-4-piperidyl)sebacat.

Die Polyisocyanat-Polyadditionsprodukte können demnach erfindungsgemäß in Gegenwart einer Mischung hergestellt werden, die enthält: gegenüber Isocyanaten reaktive Farbstoffe sowie als Stabilisatoren
(i) mindestens einen UV-Absorber ausgewählt aus der Gruppe der Benztriazole, Zimtsäureester, Diphenylacrylate und/oder Benzophenone,
(ii) mindestens ein Antioxidants ausgewählt aus der Gruppe der Phosphite, der Sulfite, Phenothiazin und/oder Dilauryl-3,3'-thiodipropionat,
(iii) mindestens einen Radikalfänger ausgewahlt aus der Gruppe der sterisch gehinderten Amine.

Bevorzugt beträgt das Gewichtsverhältnis von (i) : (ii) 1 : 1 bis 8 : 1 und das Gewichtsverhältnis von (ii) zu (iii) 0,2 : 1 bis 4 : 1 in der erfindungsgemäßen Mischung bzw. in den erfindungsgemäßen Polyisocyanat-Polyadditionsprodukten.

Besonders bevorzugt sind die Stabilisatoren in den Mischungen in folgenden Mengen enthalten:
- Mischung (I),: enthaltend 35 bis 45 Gew.-% mindestens eines Benztriazols (i), 15 bis 25 Gew.-% mindestens eines Phosphits (ii) und 35 bis 45 Gew.-% mindestens eines HALS (iii),
- Mischung (II),: enthaltend 55 bis 65 Gew.-% mindestens eines Zimtsäuresters (i), 15 bis 25 Gew.-% mindestens eines Phosphits (ii) und 15 bis 25 Gew.-% mindestens eines HALS (iii),
wobei die Prozentangaben auf das Gewicht der Stabilisatoren (i), (ii) und (iii) in der Mischung bezogen sind und in der Summe 100 % ergeben müssen. Diese bevorzugten Ausführungsformen beziehen sich sowohl auf die Mischungen als auch auf die erfindungsgemäßen Polyisocyanat-Polyadditionsprodukte.

Die gegenüber Isocyanaten reaktiven Farbstoffe sind in den Mischungen bevorzugt in einer Menge von 1 bis 6 Gew.-%, bezogen auf das Gewicht der Mischung, enthalten.

Insgesamt werden üblicherweise 0,5 bis 6 Gew.-%, bevorzugt 0,75 bis 5 Gew.-%, bezogen auf das Gewicht der gegenüber Isocyanaten reaktiven Verbindungen, an Stabilisatoren bei der Herstellung der erfindungsgemäßen Polyisocyanat-Polyadditionsprodukte eingesetzt.

Die erfindungsgmeäßen Mischungen können in allen bekannten Polyisocyanat-Polyadditionsprodukten, beispielsweise den eingangs beschrieben Typen, eingesetzt werden. Bevorzugt werden sie jedoch in thermoplastischen Polyurethanen oder in Polyurethanen, die einen geschäumten oder kompakten Kern und eine überwiegend kompakte, nicht-poröse Oberfläche aufweisen und die beispielsweise nach dem RIM-Verfahren hergestellt werden können, verwendet. Besonders bevorzugt sind Polyisocyanat-Polyadditionsadditionsprodukte, die Verwendung finden als Formteile, die Witterungseinflüssen unterliegen, besonders bevorzugt als Scheibenumguß, Profile, sowie andere Außenteile für Automobile und Schienenfahrzeuge, beispielsweise Heck-, Frontschürzen, Schweller im Automobilbau und Kotflügel. Besonders bevorzugt sind weiterhin thermoplastische Polyurethane in Form von Granulat, Pellets, Folien, Kabelummantellungen, Schläuchen, Formteilen aller Art.

Die Polyisocyanat-Polyadditionsprodukte werden erfindungsgemäß in einem Verfahren durch Umsetzung von Isocyanaten mit gegenüber Isocyanaten reaktiven Verbindungen und gegenüber Isocyanaten reaktiven Farbstoffen in Gegenwart von Stabilisatoren und gegebenenfalls Treibmitteln, Katalysatoren, Hilfsmitteln und/oder Zusatzstoffen hergestellt, wobei man als Stabilisatoren die die erfindungsgemäßen und eingangs beschriebenen Stabilisatoren (i), (ii) und (iii) einsetzt.

Die Umsetzung kann beispielsweise im one-shot-Verfahren oder nach dem Prepolymerverfahren z.B. in Formen, in einem Reaktionsextruder, mit einer Bandanlage oder nach dem bekannten reaction-injection-moulding- (RIM-) Verfahren durchgeführt werden. Werden geschäumte Polyisocyanat-Polyadditionsprodukte hergestellt, verwendet man Treibmittel bei der Umsetzung. Die erfindungsgemäßen Polyisocyanat-Polyadditionsprodukte können gegebenenfalls Harnstoffstrukturen enthalten.

Bevorzugt erfolgt die Umsetzung im RIM-Verfahren, das bevorzugt für zellige, beispielsweise mikrozellige RIM-Produkte, bei einem Verdichtungsgrad von 1,1 bis 8, besonders bevorzugt 2 bis 8, durchgeführt wird.

Weitere Ausgangsstoffen in dem erfindungsgemäßen Verfahren werden im Folgenden beispielhaft beschrieben:

Als Isocyanate kommen die an sich bekannten aliphatischen, cycloaliphatischen, araliphatischen und/oder aromatischen Isocyanate, bevorzugt Diisocyanate, in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5,Tetramethylendiisocyanat-1,4, Lysinesterdiisocyanate (LDI), Hexanethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat, 4,4'-, 2,4'- und/oder 2,2'-Diphenylmethandiisocyanat, Polyphenylpolymethylen-polyisocyanate und/oder Mischungen, enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Bevorzugt werden erfindungsgemäß aromatische Isocyanate eingesetzt, besonders bevorzugt die bereits beschriebenen aromatischen Isocyanate, da die erfindungsgemäßen Vorteile in diesen Fälle besonders zum Tragen kommen.

Als gegenüber Isocyanaten reaktive Verbindungen, die zur Unterscheidung von den bereits beschriebenen Farbstoffen per Definition keine Farbstoffe enthalten, können zweckmäßigerweise solche mit einer Funktionalität von 2 bis 8, vorzugsweise 2 bis 6, und einem Molekulargewicht von 60 bis 10000 verwendet werden, die als gegenüber Isocyanaten reaktive Gruppen Hydroxyl-, Thiol- und/oder primäre und/oder sekundäre Aminogruppen aufweisen. Bewährt haben sich z.B. Polyole, im folgenden auch als Polyolkomponente bezeichnet, ausgewählt aus der Gruppe der Polyetherpolyole, beispielsweise Polytetrahydrofuran, Polyesterpolyole, Polythioether-polyole, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 1000 mg KOH/g und vorzugsweise 24 bis 850 mg KOH/g.

Als Polyolkomponenten werden dabei für Polyurethanhartschaumstoffe, die gegebenenfalls Isocyanuratstukturen aufweisen können, hochfunktionelle Polyole, insbesondere Polyetherpolyole auf Basis hochfunktioneller Alkohole, Zuckeralkohole und/oder Saccharide als Startermoleküle eingesetzt. Für flexible Polyisocyanat-Polyadditionsprodukte, z.B. Polyurethanweichschaumstoffe oder RIM-Werkstoffe, sind 2- und/oder 3-funktionelle Polyether- und/oder Polyesterpolyole auf Basis von Glyzerin und/oder Trimethylolpropan und/oder Glykolen als Startermoleküle bzw. zu veresternde Alkohole als Polyole bevorzugt. Thermoplastische Polyurethane basieren üblicherweise auf überwiegend difunktionellen Polyesterpolyalkoholen und/oder Polyetherpolyalkoholen, die bevorzugt eine mittlere Funktionalität von 1,8 bis 2,5, besonders bevorzugt 1,9 bis 2,1, aufweisen.

Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen im Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Die Polyetherpolyole besitzen eine Funktionalität von vorzugsweise 2 bis 6 und insbesondere 2 bis 4 und Molekulargewichte von 200 bis 10000, vorzugsweise 200 bis 8000.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen, hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Als gegenüber Isocyanaten reaktive Verbindungen können gegebenenfalls Diole und/oder Triole mit Molekulargewichten von 60 bis <400 als Kettenverlängerungsmittel, die eine Funktionalität von 2 aufweisen, und/oder Vernetzungsmittel, die eine Funktionalität >2 besitzen, bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 2 bis 10 Kohlenstoffatomen, wie z.B. Ethylenglykol, Propandiol-1,3, Propandiol 1,2, Decandiol-1,10, o-, m-, p-Dihydroxycyclohexan, Diethylenglykol, Dipropylenglykol und vorzugsweise Ethylenglykol, Butandiol-1,4, Hexandiol-1,6 und Bis-(2-hydroxyethyl)-hydrochinon, Triole, wie 1,2,4-, 1,3,5-Trihydroxy-cyclo-hexan, Glycerin, Trimethylolpropan, Triethanolamin und niedermolekulare hydroxylgruppenhaltige Polyalkylenoxide auf Basis Ethylen- und/oder 1,2-Propylenoxid und den vorgenannten Diolen und/oder Triolen als Startermoleküle.

Insbesondere, wenn die erfindungsgemäßen Polyisocyanat-Polyadditionsprodukte nach dem RIM-Verfahren hergestellt werden, werden neben den glykolischen Kettenverlängern und Vernetzern bevorzugt Verbindungen mit einem Molekulargewicht von 60 bis <400 eingesetzt, die mindestens eine, bevorzugt 2 Aminogruppe enthalten. Besonders bevorzugt sind primäre und/oder sekundäre aromatische Amine und/oder Aminohydroxyverbindungen.

Thermoplastische Polyurethane werden bevorzugt mit einem sehr geringen Anteil, besonders bevorzugt ohne Vernetzungsmittel, hergestellt.

Die bereits beschriebenen gegenüber Isocyanaten reaktiven Farbstoffe stellen eine besondere Ausgestaltung der gegenüber Isocyanaten reaktiven Verbindungen dar und wurden eingangs ausführlich beschrieben. Ihre reaktiven Gruppen sind bei der Berechnung einer geeigneten Mischung zur Erzielung einer definierten Isocyanat-Kennzahl mit einzubeziehen.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 35 Gew.-%, vorzugsweise von 2 bis 32 Gew.-%, bezogen auf das Gewicht der insgesamt eingesetzten gegenüber Isocyanaten reaktiven Verbindungen, zum Einsatz.

Als Treibmittel, insbesondere zur Herstellung von Polyurethanschaumstoffen, können übliche chemisch, beispielsweise Wasser, und/oder physikalisch wirkende Treibmittel verwendet werden. Geeignet sind als solche physikalisch wirkenden Treibmittel Flüssigkeiten, welche gegenüber den organischen, gegebenenfalls modifizierten Polyisocyanaten, inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe wie beispielsweise übliche Fluorkohlenwasserstoffe und/ oder Chlorkohlenwasserstoffe, wie beispielsweise Dichlormethan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Die Treibmittel werden üblicherweise den gegenüber Isocyanaten reaktiven Verbindungen zugesetzt. Sie können jedoch der Isocyanatkomponente oder als Kombination sowohl der Polyolkomponente als auch der Isocyanatkomponente oder Vormischungen dieser Komponenten mit den übrigen Aufbaukomponenten zugesetzt werden. Die eingesetzte Menge des physikalischen wirkenden Treibmittels liegt bevorzugt bei 0 bis 25 Gew.-%, besonders bevorzugt 0 bis 15 Gew.-%, jeweils bezogen auf das Gewicht der insgesamt eingesetzten gegenüber Isocyanaten reaktiven Verbindungen. Wird Wasser als Treibmittel verwendet, bevorzugt in einer Menge von 0,1 bis 10 Gew.-% Wasser, besonders bevorzugt in einer Menge von 0,1 bis 7 Gew.-% Wasser, jeweils bezogen auf das Gewicht der insgesamt eingesetzten gegenüber Isocyanaten reaktiven Verbindungen, so wird es bevorzugt der Polyolkomponente zugesetzt, wobei Wasser bevorzugt in Kombination mit mindestens einem der genannten physikalischen Treibmittel, beispielsweise Cyclopentan, n- und/oder iso-Pentan, verwendet wird.

Als Katalysatoren können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N, N, N', N' -Tetramethylhexandiamin-1,6, Pentamethyldiethylentriamin, Dimethylpiperazin, N-Dimethylaminoethylpiperidin, 1, 2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N-Tris-(dialkylaminoalkyl)hexahydrotriazine, z.B. N,N', N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Der Reaktionsmischung zur Herstellung der Polyisocyanat-Polyadidtionsprodukte können gegebenenfalls noch weitere Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen und interne Formtrennmittel. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen, angewandt. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Isocyanate und dem Gewicht der insgesamt eingesetzten gegenüber Isocyanaten reaktiven Verbindungen, einverleibt, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat, Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Zur Herstellung der erfindungsgemäßen Polyisocyanat-Polyadditionsprodukte werden die Isocyanate und die gegenüber Isocyanaten reaktiven Verbindungen bevorzugt in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt. Falls insbesondere die Polyurethanhartschaumstoffe zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden vorteilhafter weise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen oder Reaktionsestrudern, insbesondere zur Herstellung von thermoplastischen Polyurethanen, hergestellt. Üblich ist auch das kontinuierliche Auftragen des Reaktionsgemisches auf geeigneten Bandstraßen zur Erzeugung von Paneelen.

Als besonders vorteilhaft hat es sich erwiesen, nach dem Zweikomponentenverfahren zu arbeiten und die gegenüber Isocyanaten reaktiven Verbindungen, die gegenüber den Isocyanaten reaktiven Farbstoffe und gegebenenfalls das oder die Treibmittel, die Katalysatoren und/oder Hilfs- und/oder Zusatzstoffe in der Komponente (A) zu vereinigen und als Komponente (B) die Isocyanate oder Mischungen aus den Isocyanaten und gegebenenfalls Treibmittel zu verwenden.

Die erfindungsgemäßen Stabilisatoren werden bevorzugt in dem erfindungsgemäßen Verfahren in Mischung mit den gegenüber Isocyanaten reaktiven Verbindungen, der sogenannten Polyolkomponente, beispielsweise in der bereits beschriebenen Komponente A, eingesetzt.

Die Ausgangskomponenten werden in Abhängigkeit vom Anwendungsfall bei einer Temperatur von 0 bis 100°C, vorzugsweise von 20 bis 60°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Temperatur des Formwerkzeug bzw. falls keine Form verwendet wird, die Temperatur, bei der die Umsetzung erfolgt, beträgt üblicherweise >30°C, bevorzugt 35 bis 110°C.

Die nach dem erfindungsgemäßen Verfahren hergestellten Polyurethanhartschaumstoffe weisen üblicherweise eine Dichte von 15 bis 300 kg/m³, vorzugsweise von 20 bis 240 kg/m³ und insbesondere von 25 bis 100 kg/m³, auf. Sie eignen sich beispielsweise als Isolationsmaterial im Bau- und Kühlmöbelsektor, z.B. als Zwischenschicht für Sandwichelemente oder zum Ausschäumen von Kühlschrank- und Kühltruhengehäusen, und insbesondere als Schäume, in denen Materialien durch Hineinstecken fixiert werden können, beispielsweise Blumensteckschäume, die bevorzugt eine Dichte von 20 bis 50 kg/m³ aufweisen.

Die nach dem erfindungsgemäßen Verfahren hergestellten Polyurethanweichschaumstoffe weisen üblicherweise eine Dichte von 15 bis 100 kg/m³ auf und werden bevorzugt im Möbel- und Automobilbereich eingesetzt, besonders bevorzugt als Polstermaterial.

Kompakte oder zellige, d.h. geschäumte, duromere Polyisocyanat-Polyadditionsprodukte, beispielsweise technische Teile, z.B. Gehäuse, weisen üblicherweise eine Dichte von 100 bis 700 g/l für zellige Duromere und 900 bis 1100 g/l für kompakte Duromere auf.

Die Erfindung wird in den nachfolgenden Ausführungsbeispielen näher erläutert.

### Beispiele

Es wurden verschiedene Mischungen von Stabilisatoren mit verschiedenen Farbeinstellungen, insbesondere schwarze Einstellungen, in Prüfplatten unterschiedlicher Oberflächenhärte von Shore A 70±5, über Shore A 90±5 (Scheibenumguß) bis zu Shore D60±5 (Außenteile) getestet. Als Testsysteme zur Herstellung der zähharten, elastischen Formteile im Dichtebereich von 900 bis 1200 kg/m³ wurden die folgenden Polyolrumpfsysteme eingesetzt:
1) Shore-Härte A70
   Ein Polyolrumpfsystem 1, bestehend aus 84 Gew.-Teilen eines trifunktionellen Polyols mit einer mittleren Molmasse von 5300 g/mol, 6,5 Gew.-Teilen Ethylenglykol, 0,3 Gew.-Teilen Lupragen® N203, Aminkatalysator der Fa. BASF Aktiengesellschaft, 0,2 Gew.-Teilen eines Zinnkatalysators Fomrez UL28 der Fa. Witco GmbH und 3 Gew.-Teilen eines physikalischen Treibmittels.
2) Shore-Härte A90
   Ein Polyolrumpfsystem 2, bestehend aus 46,3 Gew.-Teilen eines trifunktionellen Polyols mit einer mittleren Molmasse von 5300 g/mol, 39 Gew. -Teilen eines trifunktionellen Polyols der mittleren Molmasse von 4000 g/mol, 5,5 Gew. -Teilen Ethylenglykol, 3 Gew.-Teilen Triethanolamin, 0,1 Gew.-Teilen Lupragen® N203, Aminkatalysator der Fa. BASF Aktiengesellschaft, 0,1 Gew. -Teilen eines Zinnkatalysators Fomrez UL32 der Fa. Witco GmbH.
3) Shore-Härte D60
   Ein Polyolrumpfsystem 3, bestehend aus 74,7 Gew.-Teilen eines trifunktionellen Polyols mit einer mittleren Molmasse von 5300 g/mol, 19 Gew.-Teilen Ethylenglykol, 0,05 Gew.-Teilen Lupragen® N203, Aminkatalysator der Fa. BASF Aktiengesellschaft, 0,15 Gew. -Teilen eines Zinnkatalysators Fomrez UL32 der Fa. Witco GmbH, 0,1 Gew.-Teilen Wasser.

Vorzugsweise werden dünnwandige Formteile im RIM-Verfahren hergestellt, die gute mechanische und thermische Eigenschaften sowie hohen Rückstellgrad aufweisen. Zu diesen Polyol-Rumpfsystemen wurden jeweils 3 Teile eines Farbstoffes, bzw. der Farbmischung der Fa. Milliken, die jeweils in den folgenden Tabellen angegeben sind, und 3 Teile einer Mischung von Stabilisatoren zugegeben. Als Isocyanat wurde ein Präpolymer auf 4,4' MDI-Basis mit einem NCO-Gehalt von 26 ± 1 % verwendet. Das Mischungsverhältnis von Polyolkomponente zur Isocyanatkomponente des Shore A 70 Systems lag bei 100 : 43, des Shore A 90 Systems bei 100: 58 und des Shore D 60 Systems bei 100:115.

Folgende Stabilisatoren wurden eingesetzt:

| | | | |
|---|---|---|---|
| 1v) | (i) | 60 Gew.-% | 2-Ethylhexyl-p-methoxycinnamat |
| | (i) | 20 Gew.-% | Uvasil® 299 LM |
| | (ii) | 20 Gew.-% | Trisnonylphenylphosphit |
| 2v) | (ii) | 50 Gew.-% | Trisnonylphenylphosphit |
| | (iii) | 50 Gew.-% | Bis(1,2,2,6,6-pentamethyl-4-piperidyl)-sebacat |
| 3e) | (i) | 60 Gew.-% | 2-Ethylhexyl-p-methoxycinnamat |
| | (ii) | 20 Gew.-% | Trisnonylphenylphosphit |
| | (iii) | 20 Gew.-% | Bis(1,2,2,6,6-pentamethyl-4-piperidyl)-sebacat |
| 4v) | (i) | 70 Gew.-% | 2-Ethylhexyl-p-methoxycinnamat |
| | (iii) | 30 Gew.-% | Bis(1,2,2,6,6-pentamethyl-4-piperidyl)-sebacat |
| 5e) | (i) | 40 Gew.-% | Polyethylenglykol-3-[3-(2H-benzotriazol-2-yl)-5-tert.butyl-4-hydroxyphenyl]propionat |
| | (ii) | 20 Gew.-% | Trisnonylphenylphosphit |
| | (iii) | 40 Gew.-% | Bis(1,2,2,6,6-pentamethyl-4-piperidyl)-sebacat |

Es wurden Musterplatten 200x150x4 mm nach dem RIM-Verfahren in einer Stahlform (Formtemperatur 55°C, Temperatur der Ausgangskomponenten 40±5°C, Mischdruck 170±30 bar) hergestellt. Aus den Musterplatten wurden Prüfkörper der Abmessung 60x30 mm geschnitten und nach DIN 53387 bis zu 1300 h bewittert.

**Tabelle 1**

| Prüfkörper der Härte Shore A 70 nach Belichtung Belichtung (DIN 53387) | | | |
|---|---|---|---|
| Stabilisator-Mischung | Reactint® Black 2256 | Schwarz A2 | Schwarz M4 |
| 1v | 500 h -grau | | |
| 2v | 500 h -grau | | |
| 4v | 500 h -grau | | |
| 5e | 1300 h gering | 1300 h gering | 1300 h gering |

**Tabelle 2**

| Prüfkörper der Härte Shore A 90 nach Belichtung (DIN 53387) | | | |
|---|---|---|---|
| Stabilisator-Mischung | Reactint® Black 2256 | Schwarz A2 | Schwarz M4 |
| 3e | 500 h -gelb | | |
| 5e | 1300 h gering | 1300 h gering | 1300 h gering |

**Tabelle 3**

| Prüfkörper der Härte Shore D 60 nach Belichtung (DIN 53387) | | | |
|---|---|---|---|
| Stabilisator-Mischung | Reactint® Black 2256 | Schwarz A2 | Schwarz M4 |
| 3e | 1000 h gering | 1000 h gering | 1000 h gering |
| 5e | 1300 h gering | 1300 h gering | 1300 h gering |

Schwarz A2 ist eine Mischung aus Reactint® Blue X17AB, Reactint® Violet X80 LT und Reactint® Yellow X15, die einen schwarzen Farbeindruck ergibt.

Schwarz M4 ist eine Mischung aus Reactint® Violet X80 LT und Reactint® Yellow X15, die einen schwarzen Farbton ergibt.

Die Angaben in der Tabelle beziehen sich auf den visuellen Farbeindruck nach einer Belichtung für den angegebene Zeitraum. Die Beurteilung "gering" gibt an, daß sich der Prüfkörper durch die Belichtung nur gering verfärbte.

Die erfindungsgemäßen Proben 3e und 5e zeigten bei der Prüfung keinerlei unerwünschte Verkreidungseffekt. Die deutlich verbesserte Stabilisierung der Prüfkörper enthalten die kovalent gebundenen Farbstoffe sowie die erfindungsgemäßen Stabilisatoren zeigten sich insbesondere bei den Proben der Härte Shore A 70. Die Vergleichsproben wiesen bereits nach 500 h Bewitterung eine deutliche Farbänderung und Rißbildung auf. Dagegen verfärbte sich die erfindungsgemäße Probe 5e auch nach 1300 h nur gering. Eine Rißbildung, die bei 100-facher Vergrößerung mikroskopisch untersucht wurde, war für diese Probe nur in einem sehr geringen Ausmaß feststellbar.

Die hervorragenden Eigenschaften der erfindungsgemäßen Polyisocyanat-Polyadditionsprodukte hinsichtlich ihrer Farb- und Oberflächeneigenschaften konnte auch für Proben mit Härten von Shore A 90 und Shore D 60 nachgewiesen werden.

## Patentansprüche

1. Polyisocyanat-Polyadditionsprodukte, enthaltend kovalent gebundene Farbstoffe sowie als Stabilisatoren
(i) mindestens einen UV-Absorber, ausgewählt aus der Gruppe der Benztriazole, Zimtsäureester, Diphenylacrylate und/oder Benzophenone,
(ii) mindestens ein Antioxidants, ausgewählt aus der Gruppe der Phosphite, der Sulfite, Phenothiazin und/oder Dilauryl-3,3'-thiodipropionat,
(iii) mindestens einen Radikalfänger, ausgewählt aus der Gruppe der sterisch gehinderten Amine.

2. Polyisocyanat-Polyadditionsprodukte nach Anspruch 1, basierend auf aromatischen Isocyanaten.

3. Polyisocyanat-Polyadditionsprodukte nach Anspruch 1 mit einem geschäumten oder kompakten Kern und einer überwiegend kompakten, nicht-porösen Oberfläche.

4. Polyisocyanat-Polyadditionsprodukte nach Anspruch 1 in Form eines Scheibenumgusses, Profile, Heck- oder Frontschürzen, Schweller im Automobilbau oder Kotflügel.

5. Verwendung von Polyisocyanat-Polyadditionsprodukten gemäß einem der Ansprüche 1 bis 4 als Formteile, die Witterungseinflüssen unterliegen.

6. Verfahren zur Herstellung von Polyisocyanat-Polyadditionsprodukten durch Umsetzung von Isocyanaten mit gegenüber Isocyanaten reaktiven Verbindungen und gegenüber Isocyanaten reaktiven Farbstoffen in Gegenwart von Stabilisatoren und gegebenenfalls Treibmitteln, Katalysatoren, Hilfsmitteln und/oder Zusatzstoffen, dadurch gekennzeichnet, daß man als Stabilisatoren
(i) mindestens einen UV-Absorber ausgewählt aus der Gruppe der Benztriazole, Zimtsäureester, Diphenylacrylate und/oder Benzophenone,
(ii) mindestens ein Antioxidants ausgewählt aus der Gruppe der Phosphite, der Sulfite, Phenothiazin und/oder Dilauryl-3,3'-thiodipropionat,
(iii) mindestens einen Radikalfänger ausgewählt aus der Gruppe der sterisch gehinderten Amine
einsetzt.

7. Verfahren nach Anspruch 6, dadurch gekennzeichnet, daß man die Umsetzung nach dem RIM-Verfahren durchführt.

8. Polyisocyanat-Polyadditionsprodukte erhältlich durch ein Verfahren gemäß Anspruch 6 oder 7.

9. Mischungen, enthaltend gegenüber Isocyanaten reaktive Farbstoffe sowie als Stabilisatoren
(i) mindestens einen UV-Absorber, ausgewählt aus der Gruppe der Benztriazole, Zimtsäureester, Diphenylacrylate und/oder Benzophenone,
(ii) mindestens ein Antioxidants, ausgewählt aus der Gruppe der Phosphite, der Sulfite, Phenothiazin und/oder Dilauryl-3,3'-thiodipropionat,
(iii) mindestens einen Radikalfänger, ausgewählt aus der Gruppe der sterisch gehinderten Amine.
